Europäisches Patentamt

European Patent Office

Office européen des brevets

(11) Veröffentlichungsnummer: **0 314 906**
**A2**

(12) **EUROPÄISCHE PATENTANMELDUNG**

(21) Anmeldenummer: 88115073.4

(22) Anmeldetag: 15.09.88

(51) Int. Cl.⁴: **B29D 9/00 , B29D 7/00 ,**
**B29C 65/48 , B65H 39/16 ,**
**//B29L7:00,B29L9:00**

(30) Priorität: 03.11.87 DE 3737202

(43) Veröffentlichungstag der Anmeldung:
**10.05.89 Patentblatt 89/19**

(84) Benannte Vertragsstaaten:
**CH DE GB IT LI**

(71) Anmelder: **MASCHINENFABRIK MAX**
**KROENERT GMBH & CO.**
**Schützenstrasse 105**
**D-2000 Hamburg 50(DE)**

(72) Erfinder: **Andres, Walter**
**Frühlingstrasse 58**
**D-2000 Hamburg 54(DE)**

(74) Vertreter: **Schöning, Hans-Werner, Dipl.-Ing.**
**et al**
**Patentanwälte Niedmers & Schöning**
**Jessenstrasse 4**
**D-2000 Hamburg 50(DE)**

(54) **Verfahren und Vorrichtung zur Herstellung mehrschichtiger folienartiger Bahnen.**

(57) Es wird ein Verfahren und eine Vorrichtung zum Verbinden einer laufenden folienartigen Bahn (11) mit wenigstens einer anderen laufenden folienartigen Bahn (10) über eine auf eine der Bahnen (11) aufgebrachten Klebschicht (15) vorgeschlagen. Wenigstens eine der Bahnen (10) wird vor Ausführung der Verbindung der Bahnen (10, 11) die zwischen einer Walzenanordnung (13) erfolgt, thermische behandelt. Eine der Bahnen (11) wird vor dem Auftrag der Klebschicht (15) im wesentlichen über die gesamte Bahnbreite mit erwärmtem gasförmigem Medium (17) beaufschlagt.

Fig. 1

## Verfahren und Vorrichtung zur Herstellung mehrschichtiger folienartiger Bahnen

Die Erfindung betrifft ein Verfahren zum Verbinden einer laufenden folienartigen Bahn mit wenigstens einer anderen laufenden folienartigen Bahn über eine auf eine der Bahnen aufgebrachten Klebschicht, wobei wenigstens eine der Bahnen vor Ausführung der Verbindung der Bahnen, die zwischen einer Walzenanordnung erfolgt, thermisch behandelt wird, sowie eine Vorrichtung zur Ausführung des Verfahrens.

Bei der Herrstellung mehrschichtiger folienartiger Bahnen aus einzelnen folienartigen Bahnen, die mittels eines flächig auf wenigstens eine der Bahnen aufgetragenen Klebers miteinander verbunden werden, ist es bekannt, die folienartige Bahn, auf die der Kleber vor der Verbindung zunächst aufgetragen wird, thermisch zu behandeln, um den Kleber zur Ausführung der nachfolgenden Verbindung der Folienbahnen ausreichend zähflüssig damit ausreichend warm zu halten.

Bisher wurde zur thermischen Behandlung die Bahn vor Auftrag des Klebers dadurch erwärmt, daß die zugeführte Bahn über beheizte Walzen geführt wurde, über die ein Wärmeübertrag auf die um sie gelenkte Bahn erfolgte, wobei nachfolgend die erwärmte Bahn einem Klebemittelauftragwerk, das auf bekannte Weise arbeitet, zugeführt wurde. Die zugeführte Wärme hat zwangsläufig eine Ausdehnung der folienartigen Bahn sowohl in Bahnlängsrichtung als auch in Bahnquerrichtung zur Folge. Das Auftragwerk zum Auftragen des Klebers auf die erwärmte Bahn besteht aus einer Mehrzahl von Walzen, wobei der Vorgang des Auftragens des Klebers auf die Bahn in einer Walzenanordnung aus zwei Walzen erfolgt, zwischen denen die erwärmte Bahn durchgeführt wird.

Die folienartige Bahn, die erwärmt und mit Klebstoff versehen wird, steht naturgemäß unter einer in Bahnlängsrichtung wirkenden Zugspannung, da der Transport der Bahn ausschließlich durch Ziehen der Bahn selbst erfolgt. Der Zug selbst hat in den Bereichen, in denen die Bahn erwärmt und infolge dessen durch Wärmeausdehnung verbreitert ist, die Folge, daß sich in Bahnlängsrichtung verlaufende Falten ausbilden, die in den Walzen des Auftragswerks für Klebstoff oder anderen nachfolgenden Walzenanordnungen in den folienartigen Werkstoff eingewalzt werden mit der Folge, daß auch nach dem Verbinden und Erkalten der mehrschichtigen Bahn Strukturen erkannt werden, die nicht eliminiert werden können. Für bestimmte Anwendungsgebiete, in denen eine absolut glatte, spiegelnde, mehrschichtige Folienbahn gefordert wird, ist das bekannte Verfahren mit den vorgeschilderten erheblichen Nachteilen nicht anwendbar.

Es ist Aufgabe der vorliegenden Erfindung ein Verfahren zu schaffen, mit dem mehrschichtige folienartige Bahnen geschaffen werden können, die absolut glatt sind, wobei das Verfahren grundsätzlich unter Beibehaltung bisheriger wesentlicher Verfahrenschritte ausgeführt werden kann.

Gelöst wird die Aufgabe gemäß der Erfindung dadurch, daß die eine Bahn vor dem Auftrag der Klebeschicht im wesentlichen über die gesamte Bahnbreite mit erwärmtem gasförmigem Medium beaufschlagt wird.

Der Vorteil dieses Verfahrens besteht im wesentlichen darin, daß sich infolge der Beaufschlagung der einen Bahn mit erwärmten gasförmigem Medium die sich bei dem bekannten Verfahren zwangsweise ausbildenden Falten in Bahnlängsrichtung nicht ausbilden und damit nicht eingewalzt werden können, da das gasförmige erwärmte Medium derart auf die Bahn gerichtet werden kann, daß infolge des Ausbleibens der Falten auch kein Einwalzen zwischen den Walzen des Auftragswerks für den Kleber erfolgt und auch nachfolgende Walzen nicht noch erwärmt werden.

Vorteilhafterweise trifft das erwärmte gasförmige Medium in einem spitzen Winkel alpha auf die Bahn auf, wobei der Scheitel des Winkels in die Transportrichtung der Bahn zeigt. Es wird hierbei vorausgesetzt, daß der Winkel alpha in Abhängigkeit des die folienartige Bahn bildenden Werkstoffs, der Transportgeschwindigkeit dr Bahn, der Breite der Bahn und auch die Abhängigkeit der Temperatur des gasförmigen Mediums variiert gestaltet werden kann.

Um möglichst eine gute einstellbare Dosierbarkeit der Menge und Richtung des gasförmigen Mediums auf die Bahn zu haben, trifft das Medium vorteilhafterweise nach Art des Austritts aus einer Flachdüse im wesentlichen quer zur Transportrichtung auf die Bahn auf. Je nach Art des die folienartige Bahn bildenden Werkstoffs, der Transportgeschwindigkeit der Bahn, der Art des verwendeten Klebemittels und auch noch anderer zu Ausführung des Verfahrens wichtiger Parameter kann der Temperaturbereich des gasförmigen erwärmten Mediums vorzugsweise zwischen 40°C und 400°C betragen, d.h. dieses ist die Temperatur, mit der das gasförmige Medium auf der Bahn auftrifft.

Auch der Druck, unter dem das erwärmte gasförmige Medium auf der Bahn auftrifft, kann vorteilhafterweise zwischen einen Druck von 1 bis 5 bar liegen.

Eine Vorrichtung zur Ausführung des Fahrens, mit der mehrere folienartige Bahnen über eine Klebschicht miteinander verbunden werden können, ohne das infolge der thermischen Behandlung der einen Bahn Falten in den Folienwerkstoff eingewalzt werden, ist dadurch gekennzeichnet, daß zur thermischen Behandlung der Bahn eine Düsenanordnung vorgesehen ist, durch die ein auf die Bahn gerichtetes erwärmtes gasförmiges Medium auftrifft.

Gemäß einer bevorzugten Ausführungsform ist die Düsenanordnung in Form einer Flachdüse ausgebildet, so daß ein dosiertes und gerichtetes Aufbringen des erwärmten gasförmigen Mediums auf die zu erwärmende Bahn möglich ist.

Die Flachdüse selbst kann bei dieser Ausführungsform vorteilhafterweise durch eine Mehrzahl aneinandergrenzender Flachdüsenabschnitte, die jeweils durch eine Leitwand voneinander getrennt sind, gebildet werden, wobei diese Ausführungsform einen gleichmäßigen Austritt des erwärmten Mediums aus der Düsenanordnung gestattet, mit der Folge, daß eine wirklich gleichmäßige Erwärmung aller zu erwärmender Abschnitte der Bahn erreicht wird.

Gemäß einer anderen vorteilhaften Ausführungsform der Erfindung kann die Düsenanordnung auch durch eine Mehrzahl einzelner Düsen ausgebildet werden, so daß ggf. auch aus den unterschiedlichen Düsen gasförmiges Medium unterschiedlicher Temperatur und unterschiedlichen Drucks austreten kann, falls das für bestimmte Werkstoffe und bestimmte Geometrien der Bahnen erforderlich ist.

Die Düsenanordnung ist in ihrer Gesamtheit vorteilhafterweise im wesentlichen quer zu Bahnlängsrichtung angeordnet, wobei gemäß einer weiteren anderen vorteilhaften Ausführungsform eine gleiche oder ähnliche Düsenanordnung auf der der ersten Düsenanordnung gegenüberliegenden Seite der Bahn angeordnet sein kann. Auf diese Weise kann die Bahn auf noch genauere Weise erwärmt werden.

Grundsätzlich kann sowohl die Erwärmung des gasförmigen Mediums als auch sein Druck auf beliebige geeignete Weise erzeugt werden. Es hat sich jedoch als vorteilhaft erwiesen, daß die Düsenanordnung mit einem Behälter in Verbindung steht, in dem das gasförmige warme Medium in einem beträchtlich höheren Druck als dem gehalten wird, den die außerhalb der Düsenanordnung befindliche Luft aufweist. Im Behälter kann somit vorteilhafterweise ein hoher statischer Druck erzeugt werden, so daß das aus dem Behälter über die Düsenanordnung austretende erwärmte Medium fortwährend mit gleichmäßigem Druck die zu erwärmende folienartige Bahn beaufschlagt.

Versuche haben gezeigt, daß vorteilhafterweise die Austrittsgeschwindigkeit des Mediums aus der Düsenanordnung 50 m/sek beträgt. Es sei aber angemerkt, daß insbesondere unter Verwendung bestimmter, die folienartigen Bahnen ausbildender Werkstoffe auch höhere oder niedrigere Austrittsgeschwindigkeiten des Medium aus der Düsenanordnung denkbar sind, insbesondere wenn der Abstand der Düsenmündung zur Bahn dieses erfordert.

Als gasförmiges erwärmtes Medium sind grundsätzlich beliebige gasförmige Medien denkbar, vorteilhafterweise ist das gasförmige Medium jedoch Luft.

Die Erfindung wird nun unter Bezugnahme auf die nachfolgenden schematischen Zeichnungen anhand eines Ausführungsbeispieles eingehend beschrieben. Darin zeigen:

Fig. 1 den prinzipiellen Aufbau einer Vorrichtung zur Herstellung einer zweischichtigen folienartigen Bahn,

Fig. 2a in der Seitenansicht eine flachdüsenartig ausgebildete Düsenanordnung mit einem damit verbundenen Behälter,

Fig. 2b eine Draufsicht auf die Düsenöffnung der Darstellung von Fig. 2a,

Fig. 3 eine Draufsicht auf das Walzenanordnungsschema gemäß der Darstellung von Fig. 1 und

Fig. 4a einen Ausschnitt einer folienartigen Bahn, bei der verschiedene Ausdehnungszustände infolge thermischer Behandlung gezeigt werden, wie sie mit einer bekannten Vorrichtung erreicht werden und

Fig. 4b einen Schnitt entlang der Linie A-B von Fig. 4a durch die erwähnte Bahn.

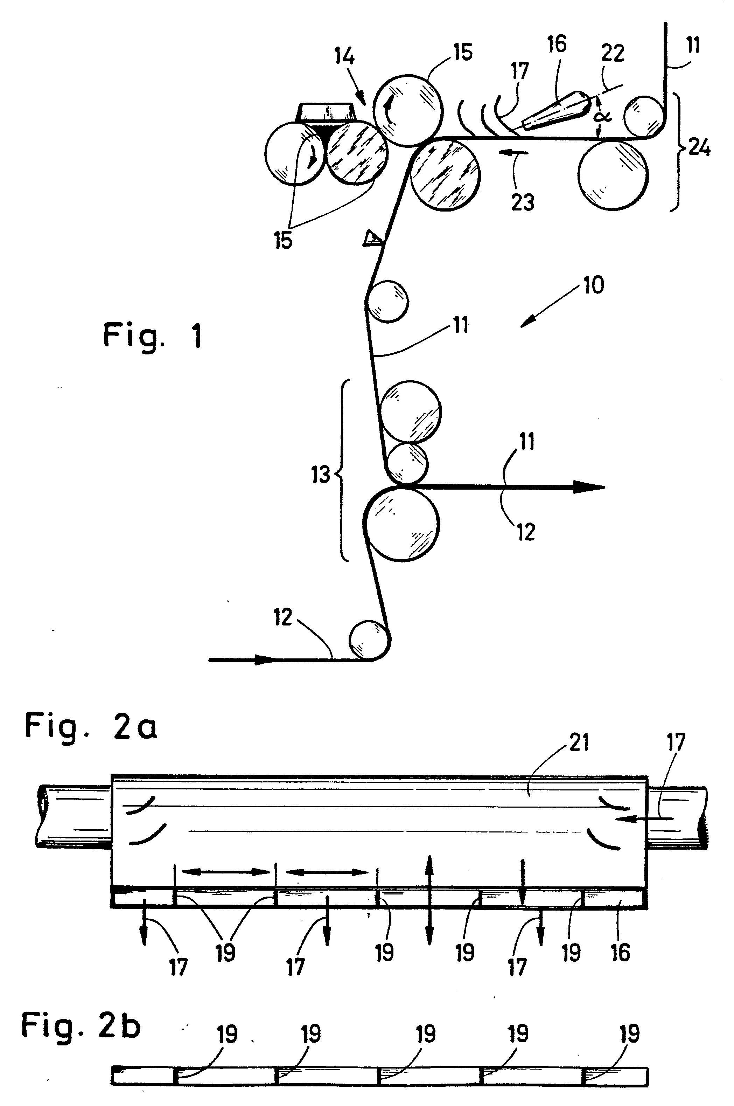

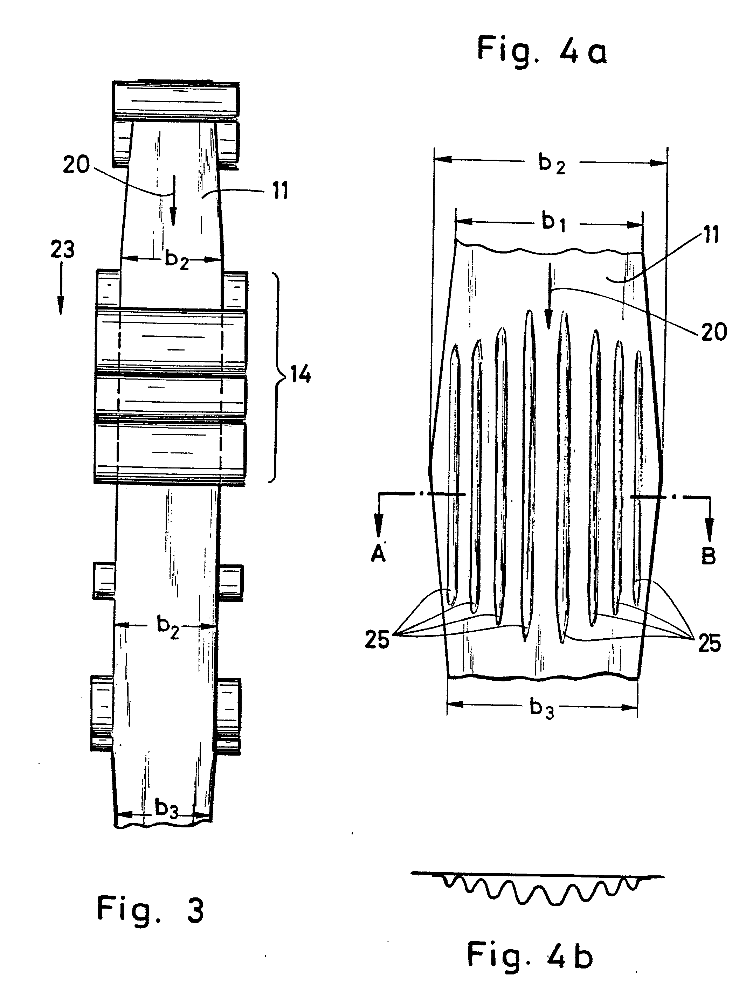

Die Vorrichtung 10, schematisch dargestellt in den Fig. 1 und 3, besteht im wesentlichen aus einer Mehrzahl von Umlenkwalzen 24, über die eine von einem hier nicht dargestellten aufgewickelten Folienvorrat kommende folienartige Bahn 11 zu einem Auftragwerk 14 zum Auftragen von Klebemittel 15 auf die Bahn 11 gelangt.

Das Klebemittel 15 wird auf bekannte Weise in einen Raum gegeben, der zwischen zwei gleichläufig arbeitende Walzen gegeben wird. Eine dieser beiden gleichläufig drehenden Walzen übergibt das auf ihr haftende Klebemittel 15 einer nur mit dieser zusammenwirkenden Walze, die wiederum auf bekannte Weise das Klebemittel auf die damit in Kontakt stehende folienartige Bahn 11 abgibt. Es sei angemerkt, daß ein Auftragwerk 14 dieser Art allgemein bekannt ist, so daß an dieser Stelle ein weiteres Eingehen darauf entbehrlich ist.

Darüber hinaus besteht die Vorrichtung 10 auch noch aus einer wenigstens aus zwei Wellen bestehenden Wellenanordnung 13, in der die vom Auftragwerk 14 kommende, mit Klebemittel 15 versehene Bahn 11, mit einer von einem anderen Folienvorrat kommenden folienartigen laufenden Bahn 10 durch Klebung verbunden wird, so daß nach Austritt aus der Walzenanordnung 13 eine zweischichtige verbundene folienartige Bahn 11, 12 austritt.

Zwischen den Umlenkwalzen 24 und dem Auftragwerk 14 ist eine Düsenanordnung 16 vorgesehen, die unter einem Winkel alpha zwischen der Düsenachse 22 und der Ebene der zugeführten Bahn geneigt ist. Der Windel alpha kann in Abhängigkeit der Temperatur des aus der Düsenanordnung 16 austretenden erwärmten gasförmigen Mediums 17, in Abhängigkeit seines Drucks und auch in Abhängigkeit des die folienartige Bahn 11 bildenden Werkstoffs auf geeignete Weise variiert werden. Auch kann der Abstand des Scheitels des Winkel alpha vom Auftragwerk 14 variiert werden, so daß der Abstand zu den Walzen des Auftragwerks 14 beliebig klein gewählt werden kann und somit eine genaue dosierte Erwärmung der Bahn 11 möglich ist.

Die Düsenanordnung 16 ist bezüglich ihres prinzipiellen Aufbaus aus den Figuren 2a und 2b ersichtlich, wobei es sich bei der in den Figuren dargestellten Ausführungsform der Düsenanordnung 16 um eine Flachdüse handelt, die durch einzelne Leitwände 19 in eine Mehrzahl von Düsenabschnitten $18_1$... $18_n$ unterteilt ist. In Verbindung mit der Düsenanordnung 16 steht ein Behälter 21, in den das erwärmte gasförmige Medium 17 eingeleitet wird. Im Behälter 21 befindet sich das erwärmte gasförmige Medium 17 unter einem erheblich höheren Druck als der den Behälter 21 außen umgebenden Luftdruck. Der Druck des sich im Behälter befindlichen erwärmten gasförmigen Mediums 17 kann grundsätzlich beliebig eingestellt werden. Der Behälter 21 ist so aufgebaut, daß sich ein hoher statischer Druck des erwärmten gasförmigen Mediums in ihm einstellen läßt, so daß das aus der Düsenanordnung 16 bzw. aus den Düsenabschnitten $18_1$... $18_n$ austretende erwärmte gasförmige Medium tatsächlich kontinuierlich austritt.

Das erwärmte gasförmige Medium 17 gelangt in Richtung der Düsenachse 22 austretend auf die Bahn 11 und erwärmt sie unmittelbar vor dem Auftragwerk 14, mit dem das Klebemittel auf der Bahn 11 aufgebracht wird. Die Düsenanordnung ist dabei im wesentlichen quer zur Bahnlängsrichtung 20 angeordnet, kann aber grundsätzlich auch, wenn die Geometrie der Vorrichtung das erfordert, anders angeordnet sein.

Die Figuren 4a und 4b zeigen einen Abschnitt einer laufenden folienartigen Bahn, die in einer bekannten Vorrichtung dadurch thermisch behandelt wurde, in dem sie über beheizte Walzen geführt wurde. Die Bahn 11 hat vor der thermischen Behandlung die Breite $b_1$, beim Abschluß der thermischen Behandlung die Breite $b_2$ und nach dem Abkühlen nach Abschluß des Verbindungsvorganges die Breite $b_3$. Da die Bahn 11 in Vorrichtungen dieser Art durch einen auf die Bahn 11 selbst wirkenden Zug durch die Vorrichtung gezogen werden und infolge der thermischen Behandlung die ursprüngliche Breite $b_1$ sich auf die Breite $b_2$ vergrößert, bilden sich infolge des auf die Bahn 11 wirkenden Zuges Falten 25, die nachteiligerweise bei der bekannten Vorrichtung durch die vorhandenen Walzen eingewalzt werden und auch nach der Abkühlung der endgültig verbundenen folienartigen Bahn in Form nachteiliger Oberflächenveränderungen (Vorstruktuierungen) sichtbar bleiben. Eine absolut glatte spiegelnde mehrschichtige folienartige Bahn ist mit der bekannten Vorrichtung nicht herstellbar.

Die erfindungsgemäße Vorrichtung 10, die unter Verwendung des erfindungsgemäßen Verfahrens arbeitet, zeigt aufgrund der andersartigen gezielten Wärmezufuhr mittels des erwärmten gasförmigen Mediums 17 keine Falten 25, so daß aufgabengemäß absolut glatte mehrschichtige spiegelnde Bahnen hergestellt werden können.

Es sei noch darauf verwiesen, daß die Temperatur des austretenden erwärmten gasförmigen Mediums 17, das in der Regel Luft sein wird, vorzugsweise zwischen 40°C und 400°C liegen kann, wobei die Temperatur in Abhängigkeit des Werkstoffs der folienartigen Bahnen, des Klebstoffs, der Transportgeschwindigkeit der Bahnen in der Vorrichtung sowie anderer wesentlichen Parameter eingestellt und gewählt werden kann. Grundsätzlich kann die Wärme, die das gasförmige Medium 17 erwärmt, auf verschiedene Weise diesem zugefügt werden, beispielsweise mittels einer elektrischen Heizung oder einer mittelbaren Beheizung über Wärmetauscher oder auf beliebige andere Weise. Es hat sich jedoch gezeigt, daß insbesondere die Beheizung mit elektrischen Heizeinrichtungen besonders günstig ist, da diese Systeme eine hohe Regelgenauigkeit haben, so daß vorbestimmte Temperaturen des Mediums 17 genau eingehalten werden können.

Bezugszeichenliste

10 Vorrichtung
11 Bahn
12 Bahn
13 Walzenanordnung
14 Auftragwerk
15 Klebemittel
16 Düsenanordnung
17 erwärmtes gasförmiges Medium
18 Düsenabschnitt
19 Leitwand
20 Bahnlängsrichtung
21 Behälter
22 Düsenachse

23 Bahntransportrichtung
24 Umlenkwalzen
25 Falte

**Ansprüche**

1. Verfahren zur Berbindung einer laufenden folienartigen Bahn mit wenigstens einer anderen folienartigen Bahn über eine auf eine der Bahnen aufgebrachten Klebschicht, wobei wenigstens eine der Bahnen vor Ausführung der Verbindung der Bahnen, die zwischen einer Walzenanordnung erfolgt, thermisch behandelt wird, dadurch gekennzeichnet, daß die eine Bahn vor dem Auftrag der Klebschicht im wesentlichen über die gesamte Bahnbreite mit erwärmtem gasförmigen Medium beaufschlagt wird.

2. Verfahren nach Anspruch 1, dadurch gekennzeichnet, daß das erwärmte gasförmige Medium in einem spitzen Winkel auf die Bahn auftritt, wobei der Scheitel des Winkels in die Transportrichtung der Bahn zeigt.

3. Verfahren nach einem oder beiden der Ansprüche 1 oder 2, dadurch gekennzeichnet, daß das Medium nach Art des Austritts aus einer Flächendüse im wesentlichen quer zur Transportrichtung auf die Bahn auftrifft.

4. Verfahren nach einem oder mehreren der Ansprüche 1 bis 3, dadurch gekennzeichnet, daß das Medium in einem Temperaturbereich von 40° C bis 400° C auf die Bahn gerichtet wird.

5. Verfahren nach einem oder mehreren der Ansprüche 1 bis 4, dadurch gekennzeichnet, daß das Medium unter einem Druck von 1 bis 5 bar auf der Bahn auftrifft.

6. Vorrichtung zum Verbinden wenigstens zweier laufender folienartiger Bahnen mittels einer Walzanordnung, wobei vor dem Verbinden der Bahnen auf wenigstens einer zuvor thermisch behandelten Bahn mittels eines Auftragwerks Klebemittel aufgebracht wird, zur Ausführung des Verfahrens nach einem oder mehreren der Ansprüche 1 bis 5, dadurch gekennzeichnet, daß zur thermischen Behandlung der Bahn (11) eine Düsenanordnung (16) vorgesehen ist, durch ein auf die Bahn (11) gerichtetes erwärmtes gasförmiges Medium (17) austritt.

7. Vorrichtung nach Anspruch 6, dadurch gekennzeichnet, daß die Düsenanordnung (16) in Form einer Flachdüse ausgebildet ist

8. Vorrichtung nach Anspruch 7, dadurch gekennzeichnet, daß die Flachdüse durch eine Mehrzahl aneinandergrenzender Flachdüsenabschnitte ($18_1$... $18_n$), die jeweils durch eine Leitwand (19) voneinander getrennt sind, gebildet wird.

9. Vorrichtung nach Anspruch 6, dadurch gekennzeichnet, daß die Düsenanordnung (16) durch eine Mehrzahl einzelner Düsen ausgebildet ist.

10. Vorrichtung nach einem oder mehreren der Ansprüche 6 bis 8, dadurch gekennzeichnet, daß die Düsenanordnung (16) im wesentlichen quer zur Bahnlängsrichtung (20) angeordnet ist.

11. Vorrichtung nach einem oder mehreren der Ansprüche 6 bis 10, dadurch gekennzeichnet, daß die Düsenanordnung (16) mit einem Behälter (21) in Verbindung steht, in dem das gasförmige warme Medium in einem wesentlich höheren Druck als dem die Düsenanordnung (14) außen umgebenden Luftdruck gehalten wird.

12. Vorrichtung nach einem oder mehrern der Ansprüche 6 bis 11, dadurch gekennzeichnet, daß die Austrittsgeschwindigkeit des Mediums aus der Düsenanordnung 50 m/sec beträgt.

13. Vorrichtung nach einem oder mehreren der Ansprüche 6 bis 11, dadurch gekennzeichnet, daß das gasförmige Medium Luft ist.

14. Vorrichtung nach einem oder mehreren der Ansprüche 6 bis 13, dadurch gekennzeichnet, daß die Düsenachse (22) der Düsenanordnung (16) in einem spitzen Winkel (alpha) auf die Bahn, (11) geneigt ausgerichtet ist, wobei der Scheitel des Winkels (alpha) in Bahntransportrichtung (23) zeigt.

Fig. 1

Fig. 2a

Fig. 2b

Fig. 4a

Fig. 3

Fig. 4b